# EUROPÄISCHE PATENTSCHRIFT

(11) **EP 2 254 269 B1**
(45) Veröffentlichungstag und Bekanntmachung des Hinweises auf die Patenterteilung: **15.05.2013**
(21) Anmeldenummer: 10002950.3
(22) Anmeldetag: 19.03.2010
(51) Int. Cl.: H04J 14/02, H04J 3/14

(54) **Verfahren und Vorrichtung zur 1+1-Protection einer optischen Übertragungsstrecke**
Method and device for 1+1 protection of an optical transmission link
Procédé et dispositif de protection 1+1 d'un lien de transmission optique

(30) Priorität: 22.05.2009 DE 102009022365
(43) Veröffentlichungstag der Anmeldung: 24.11.2010
(73) Patentinhaber: ADVA Optical Networking SE, 82152 Martinsried / München (DE)
(72) Erfinder: Hinderthür, Henning, Dr., 86923 Finning (DE)
(74) Vertreter: Eder, Thomas

(56) Entgegenhaltungen:
- US-A1- 2003 016 654
- YOSHIAKI SATO ET AL: "ECONOMICAL AND RELIABLE SDH OPTICAL TRANSMISSION SYSTEM", JAPAN TELECOMMUNICATION REVIEW, TELECOMMUNICATIONS ASSOCIATION. TOKYO, JP, Bd. 7, Nr. 6, 1. November 1995 (1995-11-01), Seiten 80-84, XP000548928, ISSN: 0915-2334

## Beschreibung

Die Erfindung betrifft ein Verfahren zur 1+1-Protection einer optischen Übertragungsstrecke mit den Merkmalen des Oberbegriffs des Patentanspruchs 1. Des Weiteren betrifft die Erfindung eine optische Übertragungsstrecke mit 1+1-Protection mit den Merkmalen des Oberbegriffs des Patentanspruchs 7.

Zur Erhöhung der Betriebssicherheit einer optischen Übertragungsstrecke, beispielsweise gegenüber einer Zerstörung des zwei Terminal-Knoten der Übertragungsstrecke verbindenden Lichtwellenleiters ist es bekannt, für einen Working-Pfad einen vollständigen Ersatzweg (Working-Pfad) bereitzustellen, wobei die Übertragung bei einer Unterbrechung des Working-Pfads auf den Protection-Pfad umgeschaltet wird. In diesem Fall wird von einer 1+1-Protection gesprochen.

Bei einer derartigen 1+1-Protection erfolgt das Umschalten vom Working-Pfad auf den Protection-Pfad derart, dass der Ausfall der optischen Signalübertragung über den Working-Pfad detektiert und dann innerhalb einer vorgegebenen Umschaltzeit auf den Working-Pfad umgeschaltet wird. Als Umschaltzeit wird beispielsweise ein Maximalwert von 50 ms akzeptiert.

Das Detektieren der Funktionsfähigkeit bzw. des Ausfalls der Signalübertragung über den Working-Pfad wird üblicherweise in den Terminal-Knoten der Übertragungsstrecke detektiert. Da sich die Terminal-Knoten üblicherweise beim Teilnehmer bzw. dem Kunden eines Netz-Providers befinden, ist es bei derartigen bekannten Übertragungsstrecken mit 1+1-Protection erforderlich, am Kundenstandort ein geeignetes aktives Equipment zu installieren. Dieses Equipment kann im Fall des Detektierens eines Ausfalls des Working-Pfads ein entsprechendes Fehlersignal erzeugen und dieses einem Netzwerk-Management-System übermitteln, welches die Übertragung des optischen Signals auf den Protection-Pfad umschaltet. Hierzu kann beispielsweise im Terminal-Knoten eine separate optische Sendeeinheit für die Signalübertragung über einen damit verbundenen Protection-Pfad vorgesehen sein. Alternativ kann das optische Sendesignal mittels eines optischen Schalters bedarfsweise dem Working-Pfad oder dem Protection-Pfad zugeführt werden.

Nachteilig bei diesen bekannten Übertragungsstrecken mit 1+1-Protection ist jedoch der im Terminal-Knoten, d.h. am Kundenstandort erforderliche Aufwand zur Bereitstellung eines aktiven Equipments für das Umschalten der Signalübertragung vom Working-Pfad auf den Protection-Pfad bzw. umgekehrt. Hierdurch ist eine Erhöhung der Kosten für die Gerätetechnik am Kundenstandort verbunden. Zudem ist hierdurch eine Erhöhung der Kosten für die Wartung des aktiven Equipments am Kundenstandort bedingt.

Der Erfindung liegt daher die Aufgabe zugrunde, ein Verfahren zur 1+1-Protection einer optischen Übertragungsstrecke und eine entsprechend ausgebildete optische Übertragungsstrecke mit 1+1-Protection zu schaffen, wobei am Kundenstandort auf den Einsatz aktiver Technik verzichtet werden kann. Zudem soll die Übertragungsstrecke so ausgebildet sein, dass im Fall des Ausfalls eines Übertragungswegs, d.h. bei Ausfall der Signalübertragung über den Working-Pfad oder der Signalübertragung über den Protection-Pfad ohne aufwendige Kommunikation über einen Netzwerk-Management-Kanal die erforderlichen Schaltvorgänge vorgenommen werden können.

Die Erfindung löst diese Aufgabe mit den Merkmalen der Patentansprüche 1 bzw. 7.

Der Erfindung liegt die Erkenntnis zugrunde, dass durch das Vorsehen einer 1 x2-Splittereinheit in jedem der Terminal-Knoten am Ende der Übertragungsstrecke das zu sendende optische Signal jeweils gleichzeitig dem Working-Pfad und dem Protection-Pfad zugeführt werden kann. Im empfangenden Terminal-Knoten werden entweder das über den Working-Pfad oder das über den Protection-Pfad übertragene Signal mittels der betreffenden 1x2-Splittereinheit zusammengeführt und weiterverarbeitet. Mittels eines im Protection-Pfad vorgesehenen Protection-Pfad-Verbindungsknoten kann das dem empfangenden Terminal-Knoten zugeführte optische Signal als gesplittetes Teilsignal, welches im Folgenden als ostseitiges Working-Pfad-Kontrollsignal bezeichnet wird, zugeführt werden. Damit kann dieses ostseitige Working-Pfad-Kontrollsignal im Protection-Pfad-Verbindungsknoten detektiert werden. Der Protection-Pfad-Verbindungsknoten ist dabei so ausgebildet, dass er hinsichtlich der Übertragung des optischen Signals vom ersten auf den zweiten (empfangenden) Terminal-Knoten aktivierbar/deaktivierbar ist. Wird im Protection-Pfad-Verbindungsknoten das ostseitige Working-Pfad-Kontrollsignal als vorhanden detektiert, so wird die Signalübertragung über den Protection-Pfad in der betreffenden Richtung (den zweiten Terminal-Knoten) deaktiviert. Wird der Working-Pfad unterbrochen, beispielsweise durch die Zerstörung eines entsprechenden Lichtwellenleiters, so entfällt das Working-Pfad-Kontrollsignal, welches im Normalfall (bei korrekter Signalübertragung über den Working-Pfad) als Teilsignal vom betreffenden Port der 1x2-Splittereinheit im empfangenden Terminal-Knoten über den betreffenden Teil des Protection-Pfads zum Protection-Pfad-Verbindungsknoten übertragen wird. Dies wird im Protection-Pfad-Verbindungsknoten detektiert, woraufhin die Signalübertragung über den Protection-Pfad in Richtung auf den betreffenden Terminal-Knoten aktiviert wird.

Hierzu muss lediglich im Protection-Pfad-Verbindungsknoten eine Steuereinheit vorgesehen sein, welche eine Detektoreinheit zur Erfassung des ostseitigen Working-Pfad-Kontrollsignals und Mittel zur Aktivierung bzw. Deaktivierung der Signalübertragung im Protection-Pfad-Verbindungsknoten in Richtung auf den betreffenden Terminal-Knoten aufweisen.

Hierdurch ist es erfindungsgemäß möglich, in den Terminal-Knoten, d.h. am Kundenstandort, auf aktives Equipment zu verzichten. Des Weiteren ist es lediglich erforderlich, im Protection-Pfad-Verbindungsknoten eine Steuereinheit mit den vorgenannten Funktionen vorzusehen. Der Protection-Pfad-Verbindungsknoten wird dabei üblicherweise an einem Standort des Netzbetreibers vorgesehen sein, an dem ohnehin ein geeignetes Equipment vorhanden sein muss.

Selbstverständlich kann eine derartige Übertragungsstrecke auch bidirektional betrieben werden. Erfolgt die Übertragung im Working-Pfad und Protection-Pfad über jeweils ein und den selben Lichtwellenleiter (single-fiber working) so muss im Protection-Pfad-Verbindungsknoten lediglich eine weitere Detektoreinheit zur Erfassung eines westseitigen Working-Pfad-Kontrollsignals vorgesehen sein. Hierbei handelt es sich um ein Teilsignal, welches durch splitten des am empfangenden ersten Terminal-Knoten empfangenen optischen Signals erzeugt wird. Während das eine Teilsignal im betreffenden Knoten als Empfangssignal weiterverarbeitet wird, wird das andere Teilsignal über den Protection-Pfad zwischen der Splittereinheit und dem westseitigen Port des Protection-Pfad-Verbindungsknoten an den Protection-Pfad-Verbindungsknoten Übertragen. Da auf diesem Teilstück des Protection-Pfads auch das normale optische Sendesignal geführt wird, welches vom ersten Terminal-Knoten fortwährend sowohl über den Working-Pfad als auch über den betreffenden Teil des Protection-Pfads in Richtung auf den zweiten Terminal-Knoten übertragen wird, ist es erforderlich, die Signalübertragung in den beiden gegenläufigen Übertragungsrichtungen (d.h. vom ersten zum zweiten Terminal-Knoten und umgekehrt) unter Verwendung voneinander unterscheidbarer optischer Trägerwellenlängen durchzuführen. Dies gilt jedoch nur für den Fall des single-fiber working.

Im Fall des dual-fiber working sind der erste und zweite Terminal-Knoten jeweils über zwei separate optische Pfade, sowohl für den Working-Pfad als auch für den Protection-Pfad, miteinander verbunden, wobei jeder der beiden Pfade zur Signalübertragung in jeweils einer einzigen Richtung dient, d.h. entweder für die Signalübertragung vom ersten zum zweiten Terminal-Knoten oder umgekehrt.

In diesem Fall kann die Übertragung der Signale in beiden Richtungen zwischen den Terminal-Knoten mit der selben optischen Trägerwellenlänge erfolgen. Denn für den Fall, dass die Signalübertragung über den Working-Pfad korrekt funktioniert, ist die Signalübertragung über den Protection-Pfad deaktiviert. In diesem Fall wird auf dem Verbindungsstück zwischen der betreffenden 1 x2-Splittereinheit im empfangenden Terminal-Knoten und dem westseitigen oder ostseitigen Port des Protection-Pfad-Verbindungsknoten lediglich das westseitige bzw. ostseitige Working-Pfad-Kontrollsignal geführt. Somit kann es auf diesem Signalweg nicht zu einer störenden Signalüberlagerung kommen.

An dieser Stelle sei erwähnt, dass im Fall einer bidirektionalen Übertragungsstrecke mit dual-fiber working in jedem Terminal-Knoten selbstverständlich zwei 1x2-Splittereinheiten vorgesehen sind, wobei ein Port der Splittereinheit jeweils mit dem betreffenden Sende- oder Empfangsequipment des Terminal-Knotens verbunden ist und die beiden anderen Ports der Splittereinheit mit dem betreffenden Working-Pfad oder weiteren Working-Pfad bzw. dem Protection-Pfad oder dem weiteren Protection-Pfad.

Wird auch im Working-Pfad ein Verbindungsknoten vorgesehen, so wird eine weiter verbesserte Flexibilität hinsichtlich der Auswahl der Signalwege für die Übertragung zwischen den beiden Terminal-Knoten erreicht. In diesem Working-Pfad-Verbindungsknoten ist ebenfalls eine separate Steuereinheit vorgesehen, welche zumindest eine Detektoreinheit zur Erfassung eines ostseitigen Protection-Pfad-Kontrollsignals aufweist. Dieses Protection-Pfad-Kontrollsignal wird dem Working-Pfad-Verbindungsknoten als mittels der betreffenden Splittereinheit im zweiten Terminal-Knoten erzeugtes Teilsignal zugeführt. Dieses Teilsignal entspricht somit dem optischen Empfangssignal, welches vom zweiten Terminal-Knoten empfangen wird. Wird dieses ostseitige Protection-Pfad-Kontrollsignal als vorhanden detektiert, so wird im Working-Pfad-Verbindungsknoten davon ausgegangen, dass eine korrekte Signalübertragung über den Protection-Pfad erfolgt. Wird der Ausfall des ostseitigen Protection-Pfad-Kontrollsignals im Working-Pfad-Verbindungsknoten festgestellt, so kann demzufolge davon ausgegangen werden, dass die Signalübertragung über den Working-Pfad in Richtung auf den zweiten Terminal-Knoten aktiviert werden muss. Die Steuereinheit im Working-Pfad-Verbindungsknoten steuert in diesem Fall die Mittel zur Aktivierung der Signalübertragung in der betreffenden Richtung so an, dass die Signalübertragung aktiviert wird.

Im Fall einer bidirektionalen Signalübertragung weist der Working-Pfad-Verbindungsknoten auch eine Detektoreinheit zur Erfassung eines westseitigen Protection-Pfad-Kontrollsignals auf. Dieses westseitige Protection-Pfad-Kontrollsignal wird dem Working-Pfad-Verbindungsknoten über den Working-Pfad zwischen dem betreffenden Port der 1x2-Splittereinheit im ersten Terminal-Knoten und dem westseitigen Port des Working-Pfad-Verbindungsknotens zugeführt.

Im Fall des dual-fiber working zur Realisierung einer bidirektionalen Übertragungsstrecke kann das Protection-Signal, welches zwischen dem Protection-Pfad-Verbindungsknoten und dem ersten oder zweiten Terminal-Knoten übertragen wird, eine andere optische Trägerwellenlänge aufweisen, als die übrigen optischen Sendesignale. Hierdurch ist es möglich, in der Empfangseinheit im ersten oder zweiten Terminal-Knoten zu unterscheiden, ob das empfangene Signal über den Working-Pfad oder den Protection-Pfad übertragen wird. Zudem wird die Betriebssicherheit etwas erhöht, für den Fall, dass fehlerhafterweise die Signalübertragung sowohl über den Working-Pfad als auch (gleichzeitig) über den Protection-Pfad erfolgt. Denn in diesem Fall würden im Pfad zwischen dem jeweiligen Verbindungsknoten und dem jeweiligen Terminal-Knoten zwei Signale mit der selben optischen Trägerfrequenz in unterschiedlichen Übertragungsrichtungen übertragen. In diesem Fall käme es im betreffenden Terminal-Knoten in jedem Fall zu einem inkorrekten Empfang, da die beiden optischen Signale, die gleichzeitig über den Working-Pfad und über den Protection-Pfad übermittelt werden, interferieren würden (eine exakt gleiche Signallaufzeit kann niemals gewährt werden). Zudem ist es für die betreffende Detektoreinheit im jeweiligen Verbindungsknoten nicht mehr auf einfache Weise möglich, den Empfang eines ostseitigen bzw. westseitigen Protection-Pfad-Kontrollsignals oder eines ostseitigen oder westseitigen Working-Pfad-Kontrollsignals zu detektieren, da in diesem Pfad gleichzeitig zwei Signale mit der selben optischen Trägerwellenlänge existieren, auch wenn diese einander gegenläufig sind. Denn im einfachsten Fall wird man die Detektoreinheit durch den Einsatz eines optischen Kopplers realisieren, welcher von dem betreffenden optischen Pfad ein Teilsignal abzweigt. Dieses Teilsignal würde bei gleichzeitiger Übertragung von Signalen in jeweils einander entgegengesetzten Richtungen nicht mehr ausschließlich durch das jeweilige Kontrollsignal verursacht. Es wäre daher nicht mehr möglich, das Kontrollsignal korrekt zu erfassen. in diesem Fall wäre es jedoch möglich, anstelle eines einfachen optischen Kopplers (einer 1 x2-Splittereinheit) einen optischen Zirkulator zu verwenden. Auf diese Weise kann die Richtungsabhängigkeit der Signalübertragung berücksichtigt werden und jeweils nur das in Richtung auf den betreffenden Verbindungsknoten geführte Signal, d.h. das jeweilige Kontrollsignal, für die Detektoreinheit ausgekoppelt werden.

Wird jedoch für die Signalübertragung vom Protection-Pfad-Verbindungsknoten in Richtung auf den Ersten oder zweiten Terminal-Knoten ein optisches Signal mit einer optischen Trägerwellenlänge verwendet, welches sich von der optischen Trägerwellenlänge der übrigen Signale unterscheidet, so kann diese Problematik einfach dadurch gelöst werden, dass für die Detektoreinheiten sowohl im Protection-Pfad-Verbindungsknoten als auch im Working-Pfad-Verbindungsknoten wellenlängensensitive 1x2-Splittereinheiten verwendet werden.

Dies kann auf einfache Weise dadurch erreicht werden, dass in jedem Verbindungsknoten die empfangenen Signale optisch elektrisch gewandelt und erforderlichenfalls einer Signalver- oder -bearbeitung zugeführt werden, bevor die entsprechend bearbeiteten oder verarbeiteten Signale einer Sendeeinheit zugeführt werden, welche das betreffende elektrische Signal wieder in ein optisches Sendesignal mit der gewünschten optischen Trägerwellenlänge umsetzt. Dies bedeutet jedoch in der Praxis keinerlei Mehraufwand, da in einem Netzwerkknoten üblicherweise ohnehin eine derartige optisch-elektrische und anschließende elektrisch-optische Signalwandlung erfolgt.

Auch die Verwendung von optischen Signalen mit unterschiedlicher optischer Trägerwellenlänge bedeutet in der Praxis keinerlei Mehraufwand, da die optischen Empfangseinheiten üblicherweise breitbandig arbeiten und demzufolge nicht an Empfangssignale mit unterschiedlichen optischen Trägerwellenlängen angepasst werden müssen. Dies gilt auch für die optischen Empfangseinheiten der Detektoreinheiten für das Erfassen der Kontrollsignale.

Das Vorsehen einer optisch-elektrischen und anschließenden elektrisch-optischen Signalwandlung bietet auch den Vorteil, dass damit gleichzeitig die Mittel zum Aktivieren/Deaktivieren der Signalübertragung in der gewünschten Richtung im Protection-Pfad-Verbindungsknoten bzw. im Working-Pfad-Verbindungsknoten realisierbar sind. Die Steuereinheit muss hier lediglich die jeweiligen Sendeeinheiten aktivieren bzw. deaktivieren.

Die Steuereinheit kann nach einer Ausführungsform der Erfindung bei Detektieren des Ausfalls eines Kontrollsignals auch weitere notwendige Bedingungen für das aktivieren der Signalübertragung in der erforderlichen Übertragungsrichtung berücksichtigen. Beispielsweise kann die Steuereinheit die Signalübertragung im jeweiligen Verbindungsknoten nur dann aktivieren (das Erfordernis eines Aktivierens in Folge eines Wegfalls des betreffenden Kontrollsignals vorausgesetzt), wenn die Steuereinheit feststellt, dass dem jeweiligen Verbindungsknoten ein durchzuschaltendes optisches Signal von ausreichender Qualität zugeführt ist. Beispielsweise kann hierzu in der Steuereinheit eine Messung des Signal-Störabstands oder der Bitfehlerrate erfolgen und die Signalübertragung nur dann durchgeschaltet werden, wenn die Signalqualität einen vorgeschriebenen Level erreicht oder überschreitet.

Weitere Ausführungsformen der Erfindung ergeben sich aus den Unteransprüchen. Die Erfindung wird nachstehend anhand in der Zeichnung dargestellter Ausführungsbeispiele näher erläutert.

In der Zeichnung zeigen
- Fig. 1: eine erste Ausführungsform einer erfindungsgemäßen Übertragungsstre- cke mit 1+1-Protection für eine Signalübertragung mit single-fiber working und einem Protection-Pfad-Verbindungsknoten;
- Fig. 2: eine weitere Ausführungsform ähnlich Fig. 1, jedoch für die bidirektionale Signalübertragung im dual-fiber working;
- Fig. 3: eine Ausführungsform ähnlich Fig. 2, jedoch mit zusätzlichem Working- Pfad-Verbindungsknoten und
- Fig. 4: ein schematisches Ablaufdiagramm für das Verfahren zur Realisierung des Aktivierens/Deaktivierens der Signalübertragung über einen Verbin- dungsknoten.

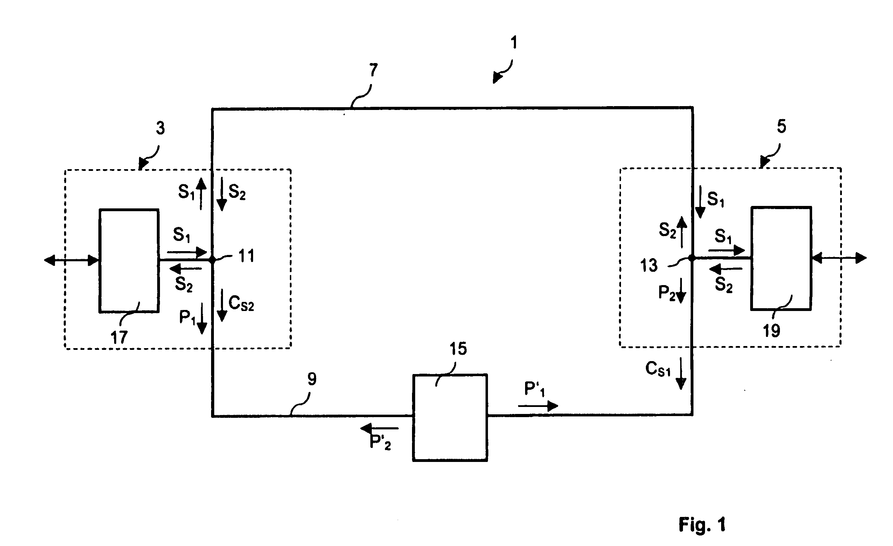

Die in Fig. 1 dargestellte optische Übertragungsstrecke 1 umfasst einen ersten Terminal-Knoten 3 der über einen Working-Pfad 7 und einen Protection-Pfad 9 mit einem zweiten Terminal-Knoten 5 verbunden ist. In jedem Terminal-Knoten 3, 5 ist eine Splittereinheit 11 bzw. 13 vorgesehen, deren knotenseitiger Port mit einer Knotensteuereinheit 17 bzw. 19 verbunden ist. Die Knoten-Steuereinheiten 17, 19 umfassen bedarfsweise eine Sendeeinheit, Empfangseinheit und ggf. weitere Einheiten zur Signalverarbeitung oder-bearbeitung. Die beiden streckenseitigen Ports der Splittereinheiten 11, 13 sind jeweils mit dem betreffenden Ende des Working-Pfads bzw. des Protection-Pfads 7, 9 verbunden. Im Protection-Pfad 9 ist ein Protection-Pfad-Verbindungsknoten 15 vorgesehen. Die Knoten-Steuereinheiten 17, 19 bzw. die Terminal-Knoten 3, 5 können, wie durch die betreffenden Pfeile angedeutet, auch mit übergeordneten Einheiten oder einer nachgeschalteten bzw. vorgeschalteten Übertragungsstrecke verbunden sein.

Die Ausführungsform einer optischen Übertragungsstrecke 1 nach Fig. 1 bezieht sich auf eine bidirektionale Übertragungsstrecke mit single-fiber working. Selbstverständlich kann anstelle einer bidirektionalen Signalübertragung auch nur eine unidirektionale Signalübertragung vorgesehen sein.

Wie aus Fig. 1 ersichtlich, erzeugt die Knoten-Steuereinheit 17 im ersten Terminal-Knoten 3 ein optisches Sendesignal S₁, welches der Splittereinheit 11 an deren knotenseitigem Port zugeführt ist. Dieses Signal wird optisch gesplittet, wobei ein Teilsignal, welches der Einfachheit halber ebenfalls mit S₁ bezeichnet ist, dem Working-Pfad 7 und das andere Teilsignal, welches mit P₁ bezeichnet ist, dem Protection-Pfad 9 zugeführt ist. Das Signal S₁ wird über den Working-Pfad 7 zum zweiten Terminal-Knoten 5 bzw. dessen Splittereinheit 13 übertragen. Eines der gesplitteten Teilsignale wird am knotenseitigen Port der Knoten-Steuereinheit 19 zugeführt. Dieses Signal ist der Einfachheit halber ebenfalls mit S₁ bezeichnet.

Das weitere Teilsignal wird am streckenseitigen Port der Splittereinheit 13 als Signal C_{S1} über den Protection-Pfad dem ostseitigen Port des Protection-Pfad-Verbindungsknotens 15 zugeführt. Das Teilsignal C_{S1} wird als ostseitiges Working-Pfad-Kontrollsignal bezeichnet.

Das Signal P₁, welches dem Protection-Pfad-Verbindungsknoten 15 an seinem westseitigen Port zugeführt wird, kann vom Protection-Pfad-Verbindungsport 15 bedarfsweise als Signal P'₁ in Richtung auf die Splittereinheit 13 des zweiten Terminal-Knotens 5 übertragen werden. Hierzu umfasst der Protection-Pfad-Verbindungsknoten 15 eine Detektoreinheit, welche das Vorhandensein des ostseitigen Working-Pfad-Kontrollsignals C_{S1} erfasst, das im normalen Arbeitsbetrieb der Übertragungsstrecke, d.h. im Working-Betrieb, über den Working-Pfad 7 vom ersten Terminal-Knoten 3 zum zweiten Terminal-Knoten 5 übertragen wird. In diesem Working-Betrieb ist die Signalübertragung über den Protection-Pfad-Verbindungsknoten in Richtung auf den zweiten Terminal-Knoten 5 deaktiviert.

Die Funktion des Protection-Pfad-Verbindungsknotens 15 wird durch eine von diesem umfasste Steuereinheit realisiert, welche auch die Detektoreinheit zur Erfassung des Kontrollsignals C_{S1} umfasst. Stellt die Steuereinheit mittels der Detektoreinheit fest, dass das Kontrollsignal C_{S1} fehlt, so wird davon ausgegangen, dass die Signalübertragung über den Working-Pfad nicht korrekt erfolgt bzw. ausgefallen ist, beispielsweise in Folge einer Zerstörung des den Working-Pfad 7 realisierenden Lichtwellenleiters. In diesem Fall steuert die Steuereinheit des Protection-Pfad-Verbindungsknotens 15 Mittel zur Aktivierung/Deaktivierung der Signalübertragung in Richtung auf den zweiten Terminal-Knoten 5 so an, dass die Signalübertragung aktiviert wird. In diesem Fall gibt der Protection-Pfad-Verbindungsknoten 15 ein optisches Signal P'₁ in Richtung auf den zweiten Terminal-Knoten 5 ab. Dieses Signal kann gegenüber dem Empfangssignal P₁ des Protection-Pfad-Verbindungsknotens 15 eine andere optische Trägerwellenlänge aufweisen. Dies ist jedoch nicht zwingend erforderlich, wenn die Übertragungsstrecke 1 nur unidirektional betrieben wird oder wenn im Fall einer bidirektionalen Übertragung im single-fiber working die Sendesignale in den beiden Terminal-Knoten 3, 5 von vornherein eine voneinander verschiedene optische Trägerwellenlänge aufweisen.

Bei der in Fig. 1 dargestellten Ausführungsform für die bidirektionale Übertragung im single-fiber working erfolgt die Signalübertragung vom zweiten Terminal-Knoten 5 zum ersten Terminal-Knoten 3 in analoger Weise. Hierzu wird ein von der Knoten-Steuereinheit 19 erzeugtes optisches Sendesignal S₂ mittels der optischen Splittereinheit 13 in zwei Teilsignale gesplittet, wobei das dem Working-Pfad 7 zugeführte Teilsignal der Einfachheit halber wiederum mit S₂ bezeichnet ist. Das dem Protection-Pfad 9 zugeführte Teilsignal ist mit P₂ bezeichnet. Im ersten Terminal-Knoten 3 wird das Signal S₂ dem betreffenden streckenseitigen Port der Splittereinheit 11 zugeführt. Eines der gesplitteten Teilsignale wird der Knoten-Steuereinheit 17 zugeführt und von dieser empfangen bzw. weiterverarbeitet. Dieses Signal ist der Einfachheit halber wiederum mit S₂ bezeichnent. Das andere optische Teilsignal ist mit C_{S2} bezeichnet und wird über den betreffenden streckenseitigen Port der Splittereinheit 11 dem Protection-Pfad 9 zugeführt. Hierbei handelt es sich um das dem westseitigen Port des Protection-Pfad-Verbindungsknotens 15 zugeführte westseitige Working-Pfad-Kontrollsignal C_{S2}.

Im Protection-Pfad-Verbindungsknoten 15 ist auch eine Detektoreinheit für das Erfassen dieses westseitigen Working-Pfad-Kontrollsignals C_{S2} vorgesehen und kann von der Steuereinheit des Protection-Pfad-Verbindungsknotens umfasst sein.

Der Protection-Pfad-Verbindungsknoten 15 umfasst des Weiteren Mittel zur Aktivierung/Deaktivierung der Signalübertragung des Signals P₂ als Signal P'₂ in Richtung auf den ersten Terminal-Knoten 3. Wie im Fall der zuerst erläuterten Signalübertragung vom ersten zum zweiten Terminal-Knoten kann das Signal P'₂ eine andere optische Trägerwellenlänge aufweisen als das Signal P₂. Die vorstehenden Erläuterungen für die jeweils andere Übertragungsrichtung gelten hier analog.

Bei dieser Ausführungsform nach Fig. 1 kann somit sichergestellt werden, dass eine Signalübertragung im Normalbetrieb, d.h. im Working-Betrieb auf eine Signalübertragung im Protection-Betrieb umgeschaltet wird, wenn die Steuereinheit im Protection-Pfad-Verbindungsknoten feststellt, dass die Signalübertragung über den Working-Pfad 7 gestört ist. Im Fall einer bidirektionalen Übertragung im single-fiber working werden im Fall eines Defekts des Working-Pfads 7 selbstverständlich beide Übertragungsrichtungen gleichzeitig auf den Protection-Pfad umgeschaltet.

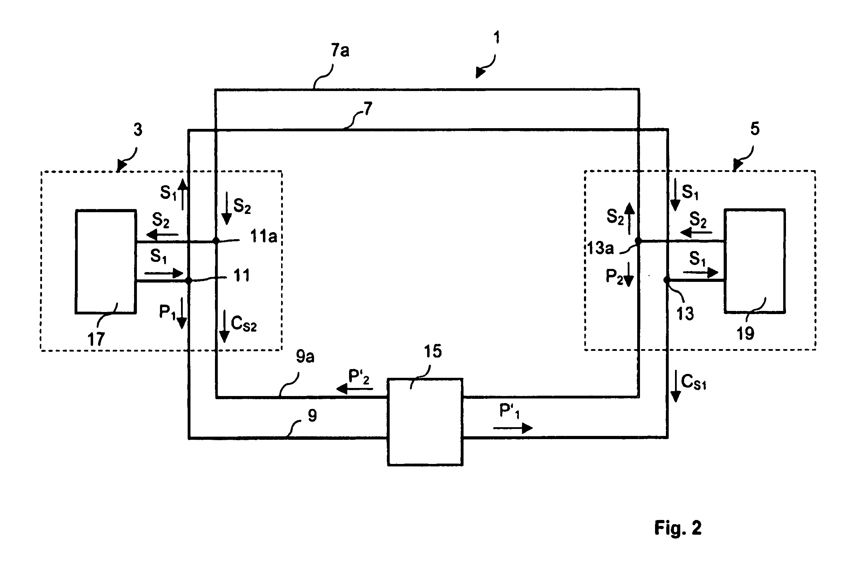

Fig. 2 zeigt eine Übertragungsstrecke 1, bei der der Working-Pfad 7 und der Protection-Pfad 9 nur für die Übertragung vom ersten Terminal-Knoten 3 zum zweiten Terminal-Knoten 5 verwendet werden. Für die Übertragung in der Gegenrichtung ist jeweils ein weiterer Working-Pfad 7a und ein weiterer Protection-Pfad 9a vorgesehen, welche im ersten und zweiten Terminal-Knoten 3, 5 jeweils über eine weitere optische Splittereinheit 11 a, 13a verbunden sind. Die knotenseitigen Ports der weiteren Splittereinheiten 11 a, 13a sind jeweils mit entsprechenden Ports der Knoten-Steuereinheiten 17, 19 verbunden. Damit ergibt sich folgende Funktionsweise der bidirektionalen Übertragungsstrecke gemäß Fig. 2:

Die Knoten-Steuereinheit 17 erzeugt ein optisches Sendesignal S₁, welches über die Splittereinheit 11 als Teilsignal S₁ dem Working-Pfad 7 und als Teilsignal P₁ dem Protection-Pfad 9 zugeführt ist. Im zweiten Terminal-Knoten 5 wird das Signal S₁ mittels der Splittereinheit 13 gesplittet, wobei eines der Teilsignale als Signal S₁ der Knoten-Steuereinheit 19 als Empfangssignal zugeführt ist. Das andere Teilsignal wird als ostseitiges Working-Pfad-Kontrollsignal C_{S1} dem Working-Pfad 9 und damit dem ostseitigen Port des Protection-Pfad-Verbindungsknotens 15 zugeführt. Auch in diesem Fall detektiert die Detektoreinheit im Verbindungsknoten 15 das Kontrollsignal C_{S1}. Die Steuereinheit des Verbindungsknotens 15 kann dann, wie im Fall der Ausführungsform nach Fig. 1, bei detektieren des Wegfalls oder Nichtvorhandenseins des Kontrollsignals C_{S1} die Signalübertragung in Richtung auf den zweiten Terminal-Knoten durchschalten. Auch in diesem Fall kann der Protection-Pfad-Verbindungsknoten 15 ein durchgeschaltetes optisches Signal P'₁ erzeugen, welches gegenüber dem ihm zugeführten Signal P₁ eine andere optische Trägerwellenlänge aufweist. hierdurch kann in der Knoten-Steuereinheit 19 anhand der Wellenlänge des Empfangssignals festgestellt werden, ob das Signal über den Working-Pfad oder den Protection-Pfad übertragen wurde.

Auch lässt sich, wie vorstehend in Verbindung mit Fig. 1 erklärt die Problematik lösen, die sich bei einer gleichzeitigen Signalübertragung sowohl über den Working-Pfad 7 als auch über den Protection-Pfad 9 ergibt, insbesondere in Bezug auf das einfache Detektieren des Kontrollsignals C_{S1}.

Zur Signalübertragung vom zweiten Terminal-Knoten 5 zum ersten Terminal-Knoten 3 erzeugt die Knoten-Steuereinheit 19 im zweiten Terminal-Knoten 5 ein optisches Sendesignal S₂, welches der weiteren optischen Splittereinheit 13a zugeführt ist. Dieses Signal wird als Teilsignal S₂ dem weiteren Working-Pfad 7a und als Teilsignal P₂ dem weiteren Working-Pfad 9a zugeführt.

Im ersten Terminal-Knoten 3 wird das Signal S₂ mittels der weiteren optischen Splitteineinheit 11a gesplittet, wobei das eine Teilsignal als Empfangssignal S₂ der Knotensteuereinheit 17 zum Empfang und zur weiteren Verarbeitung zugeführt ist. Das andere Teilsignal wird als westseitiges Working-Pfad-Kontrollsignal C_{S2} dem Working-Pfad 9a und damit dem betreffenden westseitigen Port des Protection-Pfad-Verbindungsknotens 15 zugeführt.

Detektiert die Steuereinheit, welche auch die Detektoreinheit umfasst, im Protection-Pfad-Verbindungsknoten einen Wegfall oder ein Nichtvorhandensein des Kontrollsignals C_{S2}, so wird davon ausgegangen, dass die Signalübertragung über den weiteren Working-Pfad 7a gestört ist. In diesem Fall steuert die Steuereinheit des Protection-Pfad-Verbindungsknotens 15 Mittel zur Aktivierung/Deaktivierung der Signalübertragung in Richtung auf den ersten Terminal-Knoten 3 so an, dass die Signalübertragung aktiviert wird.

Wie in Fig. 2 dargestellt, kann das vom Protection-Pfad-Verbindungsknoten 15 gesendete Signal P'₂ eine andere optische Trägerwellenlänge aufweisen als das ihm zugeführte Teilsignal P₂. Hierdurch ergeben sich die bereits vorstehend für die andere Übertragungsrichtung bzw. für die Ausführungsform gemäß Fig. 1 erläuterten Vorteile.

Allerdings ist es bei der dual-fiber working Variante gemäß Fig. 2 nicht zwingend erforderlich, dass die vom Protection-Pfad-Verbindungsknoten gesendeten optischen Signale P'₁ bzw. P'₂ eine andere optische Trägerwellenlänge aufweisen als die übrigen Signale. Geht man davon aus, dass die Signalübertragung im Protection-Pfad-Verbindungsknoten nur dann aktiviert wird, wenn definitiv die Signalübertragung im Working-Pfad 7, 7a unterbrochen ist, so kann auch eine Signalübertragung mit jeweils der selben optischen Trägerwellenlänge erfolgen, ohne dass Nachteile zu befürchten sind.

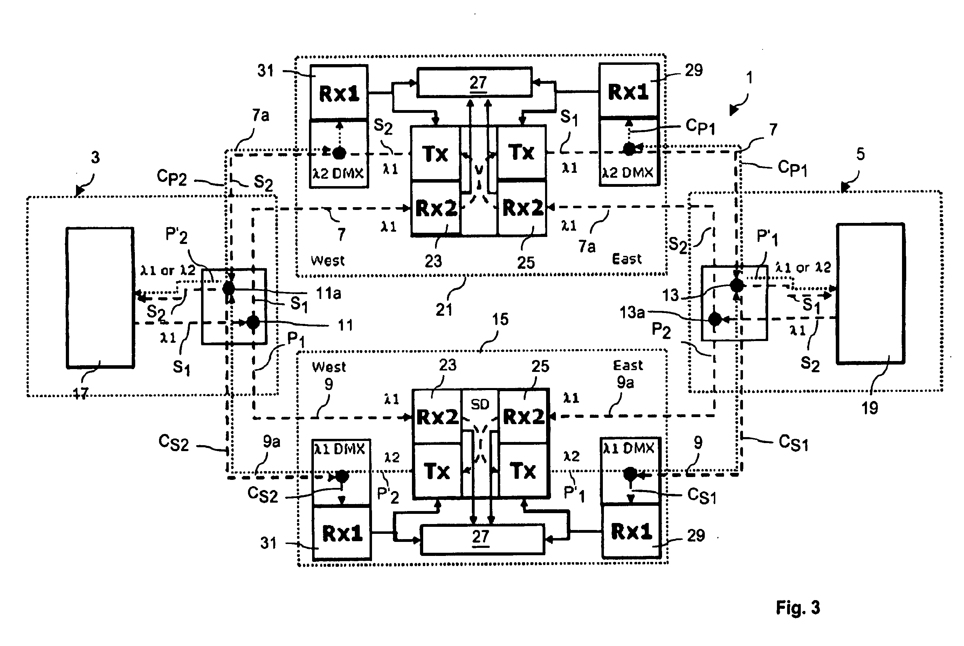

Fig. 3 zeigt eine optische Übertragungsstrecke 1 ähnlich der Variante gemäß Fig. 2, wobei die bidirektionale Signalübertragung ebenfalls im dual-fiber working erfolgt. Zusätzlich ist jedoch auch im Working-Pfad 7, 7a ein Working-Pfad-Verbindungsknoten 21 vorgesehen. Aus Gründen der Einfachheit und besseren Lesbarkeit der Zeichnung sind in Fig. 3 nur die reinen Signalpfade eingezeichnet.

Somit kann in Bezug auf die Signalverarbeitung weitgehend auf die Ausführungen in Verbindung mit der Ausführungsform gemäß Fig. 2 verwiesen werden.

Im Unterschied zur Ausführungsform gemäß Fig. 2 wird bei der Übertragungsstrecke gemäß Fig. 3 jedoch auch ein in Bezug auf beide Übertragungsrichtungen aktivierbarer/deaktivierbarer Working-Pfad-Verbindungsknoten 21 verwendet, der praktisch identisch aufgebaut ist wie der Protection-Pfad-Verbindungsknoten, abgesehen von der Wellenlängenselektivität der in den Detektoreinheiten verwendeten Splittereinheiten (siehe unten).

Der Working-Pfad-Verbindungsknoten 21 ermöglicht es, festzustellen, ob die Signalübertragung über den Working-Pfad 9, 9a korrekt funktioniert, wobei bei Ausfall einer Übertragungsrichtung die betreffende Übertragungsrichtung über den Working-Pfad 7, 7a im Working-Pfad-Verbindungsknoten durchgeschaltet bzw. aktiviert werden kann.

Dem Working-Pfad-Verbindungsknoten 21 ist hierzu an seinem ostseitigen Port ein ostseitiges Protection-Pfad-Kontrollsignal C_{P1} zugeführt. Dieses entsteht als optisches Teilsignal am betreffenden streckenseitigen Port der Splittereinheit 13 im zweiten Terminal-Knoten 5, welchem vom Protection-Pfad-Verbindungsknoten 15 das Signal P'₁ zugeführt wird. Entfällt das Kontrollsignal C_{P1}, so wird im Working-Pfad-Verbindungsknoten 21 davon ausgegangen, dass die Übertragungsrichtung über den Protection-Pfad 9 gestört ist und demzufolge durch eine entsprechende Aktivierung der Signalübertragung im Working-Pfad-Verbindungsknoten 21 durch die Signalübertragung über den Working-Pfad 7 ersetzt werden muss.

In gleicher Weise wird dem Working-Pfad-Verbindungsknoten 21 ein westseitiges Protection-Pfad-Kontrollsignal C_{P2} an seinem westseitigen Port zugeführt. Das Kontrollsignal C_{P2} entsteht durch splitten des Signals P'₂, welches vom Protection-Pfad-Verbindungsknoten der Splittereinheit 11a zugeführt wird.

Wird im Working-Pfad-Verbindungsknoten 21 der Wegfall bzw. das Nichtvorhandensein des Kontrollsignals C_{P2} detektiert, so wird davon ausgegangen, dass die Signalübertragung über den Protection-Pfad 9a vom zweiten Terminal-Knoten 5 zum ersten Terminal-Knoten 3 gestört ist. Demzufolge wird im Working-Pfad-Verbindungsknoten 21 die Signalübertragung über den Working-Pfad 7a durchgeschaltet bzw. aktiviert.

Aus Fig. 3 ist auch der detailliertere Aufbau der Verbindungsknoten 15 bzw. 21 ersichtlich, wobei es sich immer noch um rein schematische Blockdiagramme handelt. In jedem Verbindungsknoten ist eine westseitige und eine ostseitige Transceivereinheit 23 bzw. 25 vorgesehen. Jede Transceivereinheit 23, 25 umfasst eine Empfangseinheit Rx2 und eine Sendeeinheit Tx. Des Weiteren ist in jedem Verbindungsknoten 15, 21 eine Steuereinheit 27 vorgesehen, welche mit den Transceivereinheiten 23, 25 verbunden ist.

Jeder Verbindungsknoten 15, 21 verfügt des Weiteren über eine ostseitige und eine westseitige Detektoreinheit 29, 31 zur Erfassung des jeweils zugeführten Kontrollsignals C_{S1}, C_{S2}, C_{P1}, C_{P2}. Jede Detektoreinheit 29, 31 verfügt dabei über eine optische Splittereinheit, die als wellenlängenselektive Splittereinheit λ1_DMX bzw. λ2_DMX ausgebildet sein kann. Jeder der Splittereinheiten λ1_DMX bzw. λ2_DMX ist am betreffenden ostseitigen bzw. westseitigen Port des Verbindungsknotens 15 bzw. 21 das betreffende Kontrollsignal C_{S1}, C_{S2}, C_{P1}, C_{P2} zugeführt. Besitzen die von den optischen Sendeeinheiten Tx der Transceivereinheiten 23, 25 des Protection-Pfad-Verbindungsknotens 15 gesendeten optischen Signale eine andere optische Trägerwellenlänge (λ2) als die übrigen optischen Signale (λ1), so kann durch eine entsprechende Wahl der Wellenlängenselektivität in den Splittereinheiten λ1_DMX im Verbindungsknoten 15 nur das jeweilige Kontrollsignal C_{S1} bzw. C_{S2} in Richtung auf jeweils eine Empfangseinheit Rx1 abgezweigt werden, die ebenfalls von der ostseitigen bzw. westseitigen Detektoreinheit 29 bzw. 31 umfasst ist. Die von den Sendeeinheiten Tx der Transceivereinheiten 23, 25 gesendeten Signale der Wellenlänge λ2 können in diesem Fall mit allenfalls einer geringfügigen Dämpfung über die Splittereinheiten λ1_DMX in Richtung auf den betreffenden Terminal-Knoten geführt werden.

Im Fall des Working-Pfad-Verbindungsknotens 21 ergibt sich ein analoges Verhalten in Bezug auf die Kontrollsignale C_{P1} bzw. C_{P2}, wobei über die wellenlängenselektiven optischen Splittereinheiten λ**2**_DMX der ostseitigen bzw. westseitigen Detektoreinheit 29 bzw. 31 jeweils nur das Kontrollsignal C_{P1} bzw. C_{P2} abgezweigt wird, während die optischen Signale, die von den Sendeeinheiten Tx der Transceivereinheiten 23, 25 in Richtung auf den betreffenden Terminal-Knoten gesendet werden, allenfalls mit einer geringen Einfügedämpfung über die wellenlängenselektiven Splittereinheiten λ2_DMX übertragen werden.

Die Detektoreinheiten 29, 31 liefern ein Signal an die Steuereinheiten 27 der Verbindungsknoten 15 bzw. 21, wobei diese Signale den Steuereinheiten 27 die Information übermitteln, ob das betreffende Kontrollsignal vorhanden ist (bzw. korrekt vorhanden ist) oder nicht. Für das ggf. erforderliche Durchschalten der Signalübertragung über den betreffenden Verbindungsknoten 15 bzw. 21 in einer vorgegebenen Übertragungsrichtung steuert die Steuereinheit 27 die Sendeeinheiten Tx in entsprechender Weise an. Soll beispielsweise die Signalübertragung über den Working-Pfad 7 in Richtung vom ersten Terminal-Knoten 3 zum zweiten Terminal-Knoten 5 durchgeschaltet werden, so aktiviert die Steuereinheit 27 des Verbindungsknotens 21 die Sendeeinheit Tx der Transceivereinheit 25 des Verbindungsknotens 21. In gleicher Weise aktiviert die Steuereinheit 27 auch die Sendeeinheit Tx der Transceivereinheit 23, wenn die Signalübertragung vom zweiten Terminal-Knoten 5 zum ersten Terminal-Knoten 3 aktiviert werden soll.

Ein Wechseln der Signalübertragung vom Working-Pfad 7, 7a zum Protection-Pfad 9, 9a oder umgekehrt in einer bestimmten Übertragungsrichtung wird, wie vorstehend erläutert, dann vorgenommen, wenn die jeweilige Steuereinheit 27 in einem der Verbindungsknoten 15 bzw. 21 den Wegfall des betreffenden Kontrollsignals C_{S1}, C_{S2}, C_{P1}, C_{P2} detektiert. Gleichzeitig kann die Steuereinheit als weitere notwendige Voraussetzung für das Umschalten die Qualität des durchzuschaltenden Signals prüfen. Hierzu wird ein entsprechendes Qualitätssignal von der zugehörigen Empfangseinheit Rx2 an die Steuereinheit übermittelt. Das Qualitätssignal kann als einfaches binäres Signal ausgebildet sein, wo beispielsweise der Zustand logisch "0" signalisiert, dass keine ausreichende Signalqualität vorliegt und der Zustand logisch "1", dass eine ausreichende Signalqualität gegeben ist. Die Steuereinheit wird dann die betreffende Sendeeinheit Tx der zugehörigen Transceivereinheit 23, 25 nur dann aktivieren, wenn auch eine ausreichende Signalqualität signalisiert wird.

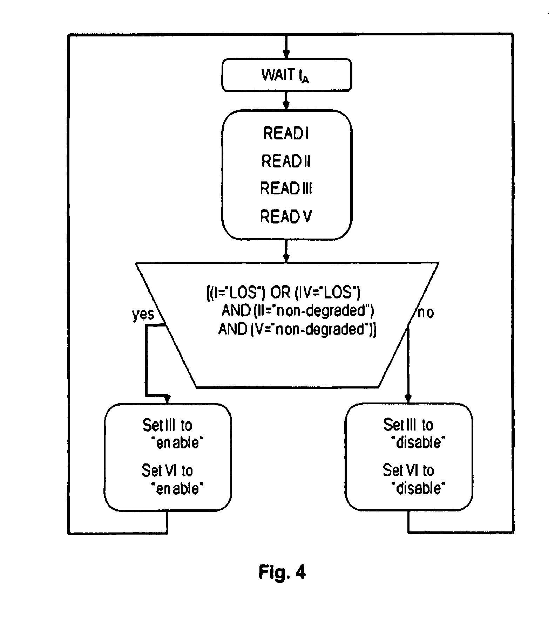

In Fig. 4 ist schematisch ein Ablaufdiagramm dargestellt, welches eine Schleife zeigt, die sowohl beim Hochfahren der gesamten Übertragungsstrecke (beispielsweise nach einem Stromausfall) als auch fortwährend im Betrieb der Übertragungsstrecke in jeder der Steuereinheiten 27 der Verbindungsknoten 15 bzw. 21 ablaufen kann.

Dabei wird bei dieser Variante davon ausgegangen, dass bei detektieren des Wegfalls eines der Working-Pfad-Kontrollsignale C_{S1} bzw. C_{S2} für beide Übertragungsrichtungen auf eine Signalübertragung über den Protection-Pfad umgeschaltet werden muss und bei Wegfall eines der Protection-Pfad-Kontrollsignale C_{P1} bzw. C_{P2} für beide Übertragungsrichtungen auf den Working-Pfad.

Dabei wird in jedem Verbindungsknoten zunächst eine unterschiedliche vorgegebene Wartezeit t_{A} (für den Verbindungsknoten 21) bzw. T_{b} für den Verbindungsknoten 15 abgewartet. Das Verwenden einer unterschiedlichen Wartezeit gewährleistet mit ausreichend hoher Sicherheit, dass nicht in beiden Knoten gleichzeitig in der selben Weise reagiert wird, wodurch sich ein unnötiges und ggf. mehrfaches Hin- und Herschalten ergäbe, das im Extremfall sogar in einer Endlosschleife enden könnte.

Nach dem Abwarten werden in dem betreffenden Knoten mittels der Steuereinheit 27 zunächst die Eingangssignale I, II, VI und V gelesen, wobei es sich bei den Signalen I und IV um die Signale der Detektoreinheiten 29, 31 handelt. Diese Signale können den Zustand "LOS" (Loss of Signal) für die betreffenden Kontrollsignale C_{S1}, C_{S2}, C_{P1}, C_{P2} signalisieren. Des Weiteren werden die Qualitätssignale II und V von der Steuereinheit 27 gelesen, die von den Empfangseinheiten Rx2 der Transceivereinheiten 23, 25 geliefert werden. Anschließend wird für den Fall, dass eines der Kontrollsignale C_{S1}, C_{S2} bzw. eines der Kontrollsignale C_{P1}, C_{P2} einen Loss of Signal signalisiert und für den Fall, dass die Signalqualität beider durchzuschaltenden Signale als "non-degraded" anzusehen ist, eine Aktivierung der zuvor deaktivierten Sendeeinheiten Tx der Transceivereinheiten 23, 25 vorgenommen. Hierzu steuert die Steuereinheit 27 die Sendeeinheiten Tx entsprechend an, wobei diese Signale im Ablaufdiagramm und in Fig. 3 mit III bzw. VI bezeichnet sind. Ist diese Bedingung nicht erfüllt, so bleiben die Sendeeinheiten deaktiviert, so dass die Signalübertragung über den jeweils anderen Pfad (bzw. beide anderen Teilpfade) erfolgen muss oder die Signalübertragung im Fall des Defekts beider Pfade nicht mehr möglich ist.

Die Erfindung ermöglicht es daher, durch das Vorsehen von einander unabhängiger Steuereinheiten in den Verbindungsknoten 15 bzw. 21 eine Überprüfung der Signalübertragung im jeweils anderen Pfad vorzunehmen, wobei die jeweiligen Sendesignale des anderen Pfads dem "Kontrollpfad" als Kontrollsignal in der Gegenrichtung zugeführt sind. Damit kann in den Terminal-Knoten und damit am Teilnehmerstandort auf den Einsatz eines aktiven Equipments verzichtet werden.

## Patentansprüche

1. Verfahren zur 1+1-Protection einer optischen Übertragungsstrecke,
(a) bei dem von einem ersten Terminal-Knoten an einem Ende der optischen Übertragungsstrecke in einem Working-Betrieb ein optisches Sendesignal über einen Working-Pfad der Übertragungsstrecke zu einem zweiten Terminal-Knoten am anderen Ende der optischen Übertragungsstrecke übertragen wird,
(b) bei dem im Fall einer Unterbrechung der Signalübertragung über den Working-Pfad vom Working-Betrieb auf einen Protection-Betrieb umgeschaltet wird, in dem eine Signalübertragung über einen separaten, den ersten mit dem zweiten Terminal-Knoten verbindenden Protection-Pfad erfolgt, und
(c) bei dem im ersten Terminal-Knoten das optische Sendesignal optisch gesplittet und sowohl dem Working-Pfad als auch dem Protection-Pfad zugeführt wird,
**dadurch gekennzeichnet,**
(d) dass im Protection-Pfad ein Protection-Pfad-Verbindungsknoten liegt, welcher hinsichtlich der Signalübertragung des ihm vom ersten Terminal-Knoten zugeführten optischen Sendesignals in Richtung auf den zweiten Terminal-Knoten aktivierbar und deaktivierbar ist, wobei der Protection-Pfad-Verbindungsknoten im Working-Betrieb deaktiviert ist,
(e) dass das am zweiten Terminal-Knoten empfangene optische Sendesignal optisch gesplittet und eines der optischen Teilsignale im zweiten Terminal-Knoten als Empfangssignal weiter verarbeitet wird und dass das andere der optischen Teilsignale als ostseitiges Working-Pfad-Kontrollsignal über den Protection-Pfad dem Protection-Pfad-Verbindungsknoten zugeführt wird,
(f) dass im Protection-Pfad-Verbindungsknoten das Vorhandensein des ostseitigen Working-Pfad-Kontrollsignals detektiert wird, und dass das Detektieren des Fehlens des ostseitigen Working-Pfad4-Kontrollsignals als notwendige Bedingung für das Aktivieren der Signalübertragung im Protection-Pfad-Verbindungsknoten in Richtung auf den zweiten Terminal-Knoten verwendet wird.

2. Verfahren nach Anspruch 1, **dadurch gekennzeichnet,**
(a) **dass** die Übertragungsstrecke bidirektional ausgebildet ist,
(i) wobei im Working-Betrieb ein optisches Sendesignal vom zweiten Terminal-Knoten über den Working-Pfad zum ersten Terminal-Knoten übertragen wird und
(ii) wobei im Fall einer Unterbrechung der Signalübertragung über den Working-Pfad vom Working-Betrieb auf einen Protection-Betrieb umgeschaltet wird, in dem eine Signalübertragung über den Protection-Pfad vom zweiten Terminal-Knoten zum ersten Terminal-Knoten erfolgt,
(b) **dass** im zweiten Terminal-Knoten das zum ersten Terminal-Knoten zu übertragende optische Sendesignal optisch gesplittet und sowohl dem Working-Pfad als auch dem Protection-Pfad zugeführt wird,
(c) **dass** der Protection-Pfad-Verbindungsknoten auch hinsichtlich der Signalübertragung des ihm vom zweiten Terminal-Knoten zugeführen optischen Signals in Richtung auf den ersten Terminal-Knoten aktivierbar und deaktivierbar ist, wobei der Protection-Pfad-Verbindungsknoten im Working-Betrieb hinsichtlich dieser Signalübertragung deaktiviert ist,
(d) **dass** das am ersten Terminal-Knoten empfangene optische Sendesignal optisch gesplittet und eines der Teilsignale im ersten Terminal-Knoten als Empfangssignal weiter verarbeitet wird und dass das andere der Teilsignale dem Protection-Pfad-Verbindungsknoten über den Protection-Pfad als westseitiges Working-Pfad-Kontrollsignal zugeführt wird,
(e) **dass** im Protection-Pfad-Verbindungsknoten das Vorhandensein des westseltigen Working-Pfad-Kontrollsignals detektiert wird, und dass das Detektieren des Fehlens des westseitigen Working-Pfad-Kontrollsignals als notwendige Bedingung für das Aktivieren der Signalübertragung im Protection-Pfad-Verbindungsknoten in Richtung auf den ersten Terminal-Knoten verwendet wird.

3. Verfahren nach Anspruch 1 oder 2, **dadurch gekennzeichnet, dass** im Working-Pfad ein Working-Pfad-Verbindungsknoten vorgesehen ist, dass das dem Protection-Pfad zugeführte optische Sendesignal nach seiner Übertragung über den Protection-Pfad im betreffenden Terminal-Knoten optisch gesplittet wird, dass eines der Teilsignale im betreffenden Terminal-Knoten als Empfangssignal weiter verarbeitet wird und dass das andere der Teilsignale als ostseitiges oder westseitiges Protection-Pfad-Kontrollsignal Ober den betreffenden Working-Pfad dem betreffenden Verbindungsknoten zugeführt wird, dass im Working-Pfad-Verbindungsknoten das Vorhandensein des ostseitigen und/oder des westseitigen Protection-Pfad-Kontrollsignals detektiert wird und dass das Detektieren des Fehlens des ostseitigen oder des westseitigen Protection-Pfad-Kontrollsignals als notwendige Bedingung für das Aktivieren der Signalübertragung über den Working-Pfad-Verbindungsknoten in Richtung auf den ersten Terminal-Knoten (Fehlen des ostseitgen Protection-Pfad-Kontrollsignals) oder in Richtung auf den zweiten Terminal-Knoten (Fehlen des westseitigen Protection-Pfad-Kontrollsignals) verwendet wird.

4. Verfahren einem der vorhergehenden Ansprüche, **dadurch gekennzeichnet, dass** im Protection-Pfad-Verbindungsknoten und/oder im Working-Pfad-Verbindungsknoten die Signalqualität eines diesem vom ersten oder zweiten Terminal-Knoten zugeführten optischen Sendesignals geprüft wird und dass der Protection-Pfad-Verbindungsknoten oder der Working-Pfad-Verbindungsknoten nur dann in Bezug auf die Signalübertragung des betreffenden optischen Sendesignals in Richtung auf den betreffenden Terminal-Knoten aktiviert wird, wenn die Signalqualität des betreffenden optischen Sendesignals einen vorgegebenen Wert für die Signalqualität erreicht oder überschritten hat.

5. Verfahren nach einem der Ansprüche 2 bis 4, **dadurch gekennzeichnet, dass** sowohl im Protection-Pfad-Verbindungsknoten als auch im Working-Pfad-Verbindungsknoten die notwendigen Bedingungen für das Aktivieren oder Deaktivieren der Signalübertragung in Richtung auf den ersten oder zweiten oder beiden Terminal-Knoten geprüft werden und dass in den Knoten nach dem Start des jeweils durchzuführenden Prüfungsvorgangs jeweils vorgegebene unterschiedliche oder innerhalb eines vorgegebenen zulässigen Bereichs zufällig gewählte Delay-Zeiten abgewartet werden.

6. Verfahren nach Anspruch 5, **dadurch gekennzeichnet, dass** die Prüfungsvorgänge in den Verbindungsknoten im Rahmen zyklisch zu durchlaufender Schleifen wiederholt werden, wobei das Durchlaufen der Schleifen vorzugsweise mit dem Hochfahren der Verbindungsknoten gestartet wird.

7. Optische Übertragungsstrecke mit 1+1-Protection,
(a) mit einem ersten Terminal-Knoten an einem Ende der optischen Übertragungsstrecke, der zur Übertragung eines optischen Sendesignals
(i) in einem Working-Betrieb der Übertragungsstrecke über einen Working-Pfad mit einem zweiten Terminal-Knoten am anderen Ende der optischen Übertragungsstrecke verbunden ist und
(ii) der zur Übertragung des optischen Sendesignals in einem Protection-Betrieb der Übertragungsstrecke Ober einen Protection-Pfad mit dem zweiten Terminal-Knoten verbunden ist, und
(b) mit einer Steuereinrichtung zur Erfassung einer Unterbrechung der Signalübertragung über den Working-Pfad und zur Umschaltung vom Working-Betrieb auf den Protection-Betrieb, wenn eine Unterbrechung der Signalübertragung über den Working-Pfad detektiert wird,
(c) wobei im ersten Terminal-Knoten eine optische 1x2-Splittereinheit vorgesehen ist, welcher an einem knotenseitigen Port das zu sendende optische Sendesignal zugeführt ist, wobei der eine der beiden streckenseitigen Ports der Splittereinheit mit dem Working-Pfad und der andere der beiden streckenseitigen Ports der Splittereinheit mit dem Protection-Pfad verbunden ist,
**dadurch gekennzeichnet,**
(d) dass im Protection-Pfad ein Protection-Pfad-Verbindungsknoten vorgesehen ist, welcher hinsichtlich der Signalübertragung des ihm vom ersten Terminal-Knoten über den Protection-Pfad zugeführen optischen Sendesignals in Richtung auf den zweiten Terminal-Knoten aktivierbar und deaktivierbar ist,
(e) dass im zweiten Terminal-Knoten eine 1x2-Splittereinheit vorgesehen ist, weicher an einem der beiden streckenseitigen Ports der Splittereinheit das über den Working-Pfad empfangene optische Sendesignal zugeführt ist, wobei der knotenseitige Port der Splittereinheit mit einer Empfangseinheit des zweiten Terminal-Knotens und der andere der beiden streckenseitigen Ports mit dem Protection-Pfad verbunden ist, wobei hierdurch das eine gesplittete Teilsignal als ostseitiges Working-Pfad-Kontrollsignal dem Protection-Pfad-Verbindungsknoten über den Working-Pfad zugeführt ist, und
(f) dass die Steuereinrichtung im Protection-Pfad-Verbindungsknoten vorgesehen ist, wobei die Steuereinrichtung eine Detektoreinheit zur Erfassung des ostseitigen Working-Pfad-Kontrolisignals und Mittel zur Aktivierung oder Deaktivierung der Signalübertragung im Protection-Pfad-Verbindungsknoten in Richtung auf den zweiten Terminal-Knoten umfasst, und
(g) dass die Steuereinrichtung die im Working-Betrieb im Protection-Pfad-Verbindungsknoten deaktivierte Signalübertragung aktiviert, wenn die Detektoreinheit kein ostseitiges Working-Pfad-Kontrollsignal detektiert und wenn gegebenenfalls weitere notwendige Bedingungen erfüllt sind.

8. Optische Übertragungsstrecke nach Anspruch 7, **dadurch gekennzeichnet,**
(a) **dass** die Übertragungsstrecke bidirektional ausgebildet ist, wobei im zweiten Terminal-Knoten dem knotenseitigen Port der 1x2-Splittereinheit das zum ersten Terminal-Knoten zu übertragende optische Sendesignal zugeführt ist, wobei die gesplitteten optischen Teilsignale über die beiden streckenseitigen Ports dem Working-Pfad und dem Protection-Pfad zugeführt sind und
(b) **dass** der Protection-Pfad-Verbindungsknoten auch hinsichtlich der Signalübertragung des ihm vom zweiten Terminal-Knoten zugeführen optischen Signals in Richtung auf den ersten Terminal-Knoten aktivierbar und deaktivierbar ist.
(c) **dass** das am ersten Terminal-Knoten empfangene optische Sendesignal dem betreffenden streckenseitigen Port der 1x2-Splittereinheit zugeführt ist, dass eines der optischen Teilsignale dem knotenseitigen Port der Splittereinheit zugeführt und einer damit verbundenen, im ersten Terminal-Knoten vorgesehenen Empfangseinheit zugeführt ist, und dass das andere der optischen Teilsignale dem betreffenden anderen streckenseitigen Port der 1x2-Splittereinheit und damit Ober den Protection-Pfad dem Protection-Pfad-Verbindungsknoten als westseitiges Working-Pfad-Kontrollsignal zugeführt ist,
(d) **dass** die Steuereinrichtung eine Detektoreinheit zur Erfassung des westseitigen Working-Pfad-Kontrollsignals und Mittel zur Aktivierung oder Deaktivierung der Signalübertragung im Protection-Pfad-Verbindungsknoten in Richtung auf den ersten Terminal-Knoten umfasst, und
(e) **dass** die Steuereinrichtung die im Working-Betrieb im Protection-Pfad-Verbindungsknoten deaktivierte Signalübertragung in Richtung auf den ersten Terminal-Knoten aktiviert, wenn die Detektoreinheit kein westseitiges Working-Pfad-Kontrollsignal detektiert und wenn gegebenenfalls weitere notwendige Bedingungen erfüllt sind.

9. Optische Übertragungsstrecke nach Anspruch 7, **dadurch gekennzeichnet,**
(a) **dass** die Übertragungsstrecke bidirektional ausgebildet ist, dass im zweiten Terminal-Knoten eine weitere optische 1x2-Splittereinheit vorgesehen ist, welcher an einem knotenseitigen Port das zu sendende optische Sendesignal zugeführt ist, wobei der eine der beiden streckenseitigen Ports der weiteren Splittereinheit mit einem weiteren Working-Pfad und der andere der beiden streckenseitigen Ports der weiteren Splittereinheit mit einem weiteren Protection-Pfad verbunden ist,
(b) **dass** der weitere Protection-Pfad ebenfalls über den Protection-Pfad-Verbindungsknoten geführt ist, welcher auch hinsichtlich der Signalübertragung des ihm vom zweiten Terminal-Knoten Ober den Protection-Pfad zugeführen optischen Sendesignals in Richtung auf den ersten Terminal-Knoten aktivierbar und deaktivierbar ist,
(c) **dass** im zweiten Terminal-Knoten eine 1x2-Splittereinheit vorgesehen ist, welcher an einem der beiden streckenseitigen Ports der Splittereinheit das über den Working-Pfad empfangene optische Sendesignal zugeführt ist, wobei der knotenseitige Port der Splittereinheit mit einer Empfangseinheit des zweiten Terminal-Knotens und der andere der beiden streckenseitigen Ports mit dem Protection-Pfad verbunden ist, wobei hierdurch das eine gesplittete Teilsignal als ostseitiges Working-Pfad-Kontrollsignal dem Protection-Pfad-Verbindungsknoten über den Working-Pfad zugeführt ist,
(d) **dass** die Steuereinrichtung eine Detektoreinheit zur Erfassung des westseitigen Working-Pfad-Kontrollsignals und Mittel zur Aktivierung oder Deaktivierung der Signalübertragung im Protection-Pfad-Verbindungsknoten in Richtung auf den ersten Terminal-Knoten umfasst, und
(e) **dass** die Steuereinrichtung die im Working-Betrieb im Protection-Pfad-Verbindungsknoten deaktivierte Signalübertragung in Richtung auf den ersten Terminal-Knoten aktiviert, wenn die Detektoreinheit kein westseitiges Working-Pfad-Kontrollsignal detektiert und wenn gegebenenfalls weitere notwendige Bedingungen erfüllt sind.

10. Optische Übertragungsstrecke nach einem der Ansprüche 7 bis 9, **dadurch gekennzeichnet,**
(a) **dass** im Working-Pfad ein Working-Pfad-Verbindungsknoten vorgesehen ist, welchem im Protection-Betrieb das über den Protection-Pfad vom ersten zum zweiten Terminal-Knoten übertragene optische Signal mittels der 1x2-Splittereinheit des zweiten Terminal-Knotens über den Worklng-Pfad als ostseitiges Protection-Pfad-Kontrollsignal zugeführt ist,
(b) **dass** der Working-Pfad-Verbindungsknoten eine Steuereinrichtung aufweist, welche eine Detektoreinheit zur Erfassung des ostseitigen Working-Pfad-Kontrollsignals und Mittel zur Aktivierung oder Deaktivierung der Signalübertragung im Working-Pfad-Verbindungsknoten in Richtung auf den zweiten Terminal-Knoten umfasst, und
(c) **dass** die Steuereinrichtung die im Protection-Betrieb im Working-Pfad-Verbindungsknoten deaktivierte Signalübertragung in Richtung auf den zweiten Terminal-Knoten aktiviert, wenn die Detektoreinheit kein ostseitiges Working-Pfad-Kontrollsignal detektiert und wenn gegebenenfalls weitere notwendige Bedingungen erfüllt sind.

11. Optische Übertragungsstrecke nach Anspruch 10, **dadurch gekennzeichnet,**
(a) **dass** dem Working-Pfad-Verbindungsknoten im Protection-Betrieb das über den Protection-Pfad oder den weiteren Protection-Pfad vom zweiten zum ersten-Terminal-Knoten übertragene optische Signal mittels der betreffenden 1x2-Splittereinheit des ersten Terminal-Knotens über den Working-Pfad oder den weiteren Working-Pfad als westseitiges Protection-Pfad-Kontrollsignal zugeführt ist,
(b) **dass** die Steuereinrichtung eine Detektoreinheit zur Erfassung des westseitigen Working-Pfad-Kontrollsignals und Mittel zur Aktivierung oder Deaktivierung der Signalübertragung im Working-Pfad-Verbindungsknoten in Richtung auf den ersten Terminal-Knoten umfasst, und
(c) **dass** die Steuereinrichtung die im Protection-Betrieb im Working-Pfad-Verbindungsknoten deaktivierte Signalübertragung in Richtung auf den ersten Terminal-Knoten aktiviert, wenn die Detektoreinheit kein westseitiges Working-Pfad-Kontrollsignal detektiert und wenn gegebenenfalls weitere notwendige Bedingungen erfüllt sind.

12. Optische Übertragungsstrecke nach einem der Ansprüche 7 bis 11, **dadurch gekennzeichnet, dass** im Protection-Pfad-Verbindungsknoten und/oder im Working-Pfad-Verbindungsknoten für jede Übertragungsrichtung eine zugeordnete Empfängereinheit und eine zugeordnete Sendeeinheit vorgesehen ist, wobei der Empfangereinheit das betreffende vom ersten zum zweiten Terminal-Knoten oder umgekehrt zu übertragende optische Signal zugeführt ist, wobei die Empfängereinheit das optische Signal in ein elektrisches Signal wandelt und das elektrische Signal unmittelbar oder nach einer Signalverarbeitung der zugeordneten Sendeeinheit zuführt, welche von der Steuereinrichtung aktivierbar/deaktivierbar ist.

13. Optische Übertragungsstrecke nach Anspruch 12, **dadurch gekennzeichnet, dass** das elektrische Signal der Steuereinrichtung zugeführt ist, dass die Steuereinrichtung die Signalqualität des Signals erfasst und dass die Steuereinrichtung das Erreichen oder Überschreiten eines vorgegebenen Levels für die Signalqualität als weitere notwendige Bedingung für das Aktivieren des Protection-Pfad-Verbindungsknotens oder des Working-Pfad-Verbindungsknotens in Bezug auf die jeweilige Übertragungsrichtung verwendet.

14. Optische Übertragungsstrecke nach Anspruch 12 oder 13, **dadurch gekennzeichnet, dass** die Sendeeinheiten des Protection-Pfad-Verbindungsknotens eine von der optischen Wellenlänge des jeweiligen Empfangssignals verschiedene optische Wellenlänge aufweisen.

15. Optische Übertragungsstrecke nach einem der Ansprüche 7 bis 14, **dadurch gekennzeichnet, dass** die Detektoreinheiten einen optischen Splitter umfassen, welcher das zu erfassende optische Signal splittet und ein Teilsignal einer optischen Empfangseinheit zuführen, welche das optische Teilsignal in ein elektrisches Signal wandelt und das Vorhandensein dieses elektrischen Signals detektiert und der Steuereinrichtung ein Signal zuführt, welches der Steuereinrichtung die Information übermittelt, ob ein optisches Signal detektiert wurde oder nicht

## Claims

1. Method for 1+1 protection of an optical transmission link,
(a) wherein in a working mode an optical send signal is transmitted from a first terminal node at one end of the optical transmission link via a working path of the transmission link to a second terminal node at the other end of the optical transmission link,
(b) wherein in the case of an interruption of the signal transmission via the working path a change-over is effected from the working mode to a protection mode in which a signal transmission takes place via a separate protection path connecting the first terminal node to the second terminal node, and
(c) wherein in the first terminal node the optical send signal is optically split and is supplied both to the working path and to the protection path,
characterised
(d) in that a protection-path connection node is situated in the protection path, said connection node being capable of being activated and deactivated with regard to the signal transmission of the optical send signal supplied to it from the first terminal node in the direction towards the second terminal node, the protection-path connection node being deactivated in the working mode,
(e) in that the optical send signal received at the second terminal node is optically split, and one of the optical component signals is processed further in the second terminal node as a receive signal, and in that the other one of the optical component signals is supplied to the protection-path connection node as an east-side working-path control signal via the protection path,
(f) in that in the protection-path connection node the presence of the east-side working-path control signal is detected, and in that the detecting of the absence of the east-side working-path control signal is used as a necessary condition for the activating of the signal transmission in the protection-path connection node in the direction towards the second terminal node.

2. Method according to Claim 1, **characterised**
(a) **in that** the transmission link is designed to be bidirectional,
(i) whereby in the working mode an optical send signal is transmitted from the second terminal node via the working path to the first terminal node and
(ii) whereby in the case of an interruption of the signal transmission signal via the working path a change-over is effected from the working mode to a protection mode in which a signal transmission takes place via the protection path from the second terminal node to the first terminal node,
(b) **in that** in the second terminal node the optical send signal to be transmitted to the first terminal node is optically split and is supplied both to the working path and to the protection path,
(c) **in that** the protection-path connection node is also capable of being activated and deactivated with regard to the signal transmission of the optical signal supplied to it from the second terminal node in the direction towards the first terminal node, the protection-path connection node being deactivated in the working mode with regard to this signal transmission,
(d) **in that** the optical send signal received at the first terminal node is optically split and one of the component signals is processed further in the first terminal node as a receive signal, and in that the other one of the component signals is supplied to the protection-path connection node as a west-side working-path control signal via the protection path,
(e) **in that** in the protection-path connection node the presence of the west-side working-path control signal is detected, and in that the detecting of the absence of the west-side working-path control signal is used as a necessary condition for the activating of the signal transmission in the protection-path connection node in the direction towards the first terminal node.

3. Method according to Claim 1 or 2, **characterised in that** a working-path connection node is provided in the working path, **in that** the optical send signal supplied to the protection path is optically split in the terminal node in question after its transmission via the protection path, **in that** one of the component signals is processed further in the terminal node in question as a receive signal, and **in that** the other one of the component signals is supplied to the connection node in question as an east-side or west-side protection-path control signal via the working path in question, **in that** in the working-path connection node the presence of the east-side and/or west-side protection-path control signal is detected, and **in that** the detecting of the absence of the east-side or west-side protection-path control signal is used as a necessary condition for the activating of the signal transmission via the working-path connection node in the direction towards the first terminal node (absence of the east-side protection-path control signal) or in the direction towards the second terminal node (absence of the west-side protection-path control signal).

4. Method according to one of the preceding claims, **characterised in that** in the protection-path connection node and/or in the working-path connection node the signal quality of an optical send signal supplied to said node from the first or second terminal node is examined, and **in that** the protection-path connection node or the working-path connection node is activated with respect to the signal transmission of the optical send signal in question in the direction towards the terminal node in question only when the signal quality of the optical send signal in question attains or has exceeded a predetermined value of the signal quality.

5. Method according to one of Claims 2 to 4, **characterised in that** both in the protection-path connection node and in the working-path connection node the necessary conditions for the activating or deactivating of the signal transmission in the direction towards the first or second terminal node or both terminal nodes are examined, and **in that** in the nodes differing delay times predetermined in the given case or delay times chosen at random within a predetermined permissible range are waited out after the start of the examination procedure to be carried out in the given case.

6. Method according to Claim 5, **characterised in that** the examination procedures in the connection nodes are repeated within the scope of loops to be passed through cyclically, the passing through the loops preferentially being started with the start-up of the connection nodes.

7. Optical transmission link path with 1+1 protection,
(a) with a first terminal node at one end of the optical transmission link, which for the purpose of transmitting an optical send signal
(i) in a working mode of the transmission link has been connected via a working path to a second terminal node at the other end of the optical transmission link and
(ii) which for the purpose of transmitting the optical send signal in a protection mode of the transmission link has been connected via a protection path to the second terminal node, and
(b) with a control device for registering an interruption of the signal transmission via the working path and for switching over from the working mode to the protection mode when an interruption of the signal transmission via the working path is detected,
(c) wherein in the first terminal node an optical 1x2 splitter unit is provided, to which at a node-side port the optical send signal to be sent has been supplied, one of the two link-side ports of the splitter unit being connected to the working path, and the other one of the two link-side ports of the splitter unit being connected to the protection path,
characterised
(d) in that in the protection path a protection-path connection node is provided which is capable of being activated and deactivated with regard to the signal transmission of the send signal supplied to said node from the first terminal node via the protection path in the direction towards the second terminal node,
(e) in that in the second terminal node a 1x2 splitter unit is provided, to which at one of the two link-side ports of the splitter unit the optical send signal received via the working path has been supplied, the node-side port of the splitter unit being connected to a receive unit of the second terminal node, and the other one of the two link-side ports being connected to the protection path, whereby by this means the one split component signal has been supplied to the protection-path connection node via the protection path by way of east-side working-path control signal, and
(f) in that the control device is provided in the protection-path connection node, the control device including a detector unit for registering the east-side working-path control signal and means for activating or deactivating the signal transmission in the protection-path connection node in the direction towards the second terminal node, and
(g) in that the control device activates the signal transmission deactivated in the working mode in the protection-path connection node when the detector unit does not detect an east-side working-path control signal and when optionally further necessary conditions are satisfied.

8. Optical transmission link according to Claim 7, **characterised**
(a) **in that** the transmission link is designed to be bidirectional, whereby in the second terminal node the optical send signal to be transmitted to the first terminal node has been supplied to the node-side port of the 1x2 splitter unit, whereby the split optical component signals have been supplied to the working path and to the protection path via the two link-side ports and
(b) **in that** the protection-path connection node is also capable of being activated and deactivated with regard to the signal transmission of the optical signal supplied to said node from the second terminal node in the direction towards the first terminal node,
(c) **in that** the optical second send signal received at the first terminal node has been supplied to the link-side port in question of the 1x2 splitter unit, in that one of the optical component signals has been supplied to the node-side port of the splitter unit and to a receive unit connected to said port and provided in the first terminal node, and in that the other one of the optical component signals has been supplied to the other link-side port in question of the 1x2 splitter unit and hence via the protection path to the protection-path connection node by way of west-side working-path control signal,
(d) **in that** control device includes a detector unit for registering the west-side working-path control signal and means for activating or deactivating the signal transmission in the protection-path connection node in the direction towards the first terminal node, and
(e) **in that** the control device activates the signal transmission deactivated in the working mode in the protection-path connection node in the direction towards the first terminal node when the detector unit does not detect a west-side working-path control signaL and when optionally further necessary conditions are satisfied.

9. Optical transmission link according to Claim 7, **characterised**
(a) **in that** the transmission link is designed to be bidirectional, in that in the second terminal node a further optical 1x2 splitter unit is provided, to which at a node-side port the optical send signal to be sent has been supplied, one of the two link-side ports of the further splitter unit being connected to a further working path, and the other one of the two link-side ports of the further splitter unit being connected to a further protection path,
(b) **in that** the further protection path is routed likewise via the protection-path connection node which is also capable of being activated and deactivated with regard to the signal transmission of the optical send signal supplied to it from the first terminal mode via the protection path in the direction towards the first terminal node,
(c) **in that** in the second terminal node a 1x2 splitter unit is provided, to which at one of the two link-side ports of the splitter unit the optical send signal received via the working path has been supplied, the mode-side port of the splitter unit being connected to a receive unit of the second terminal node, and the other one of the two link-side ports being connected to the protection path, whereby by this means the one split component signal has been supplied to the protection-path connection node via the working path by way of east-side working-path control signal,
(d) **in that** the control device includes a detector unit for registering the west-side working-path control signal and means for activating or deactivating the signal transmission in the protection-path connection node in the direction towards the first terminal node, and
(e) **in that** the control device activates the signal transmission deactivated in the working mode in the protection-path connection node in the direction towards the first terminal node when the detector unit does not detect a west-side working-path control signal and when optionally further necessary conditions are satisfied.

10. Optical transmission link according to one of Claims 7 to 9, **characterised**
(a) **in that** in the working path a working-path connection node is provided, to which in the protection mode the optical signal transmitted via the protection path from the first to the second terminal node has been supplied by means of the 1x2 splitter unit of the second terminal node via the working path by way of east-side protection-path control signal,
(b) **in that** the working-path connection node exhibits a control device which includes a detector unit for registering the east-side working-path control signal and means for activating or deactivating the signal transmission in the working-path connection node in the direction towards the second terminal node, and
(c) **in that** the control device activates the signal transmission deactivated in the protection mode in the working-path connection node in the direction towards the second terminal node when the detector unit does not detect an east-side working-path control signal and when optionally further necessary conditions are satisfied.

11. Optical transmission link according to Claim 10, **characterised**
(a) **in that** the optical signal transmitted via the protection path or via the further protection path from the second terminal node to the first terminal node has been supplied to the working-path connection node in the protection mode by means of the 1x2 splitter unit in question of the first terminal node via the working path or via the further working path by way of west-side protection-path control signal,
(b) **in that** the control device includes a detector unit for registering the west-side working-path control signal and means for activating or deactivating the signal transmission in the working-path connection node in the direction towards the first terminal node, and
(c) **in that** the control device activates the signal transmission deactivated in the protection mode in the working-path connection node in the direction towards the first terminal node when the detector unit does not detect a west-side working-path control signal and when optionally further necessary conditions are satisfied.

12. Optical transmission link according to one of Claims 7 to 11, **characterised in that** an assigned receiver unit and an assigned send unit are provided in the protection-path connection node and/or in the working-path connection node for each transmission direction, whereby the optical signal in question to be transmitted from the first terminal node to the second terminal node or conversely has been supplied to the receiver unit, whereby the receiver unit converts the optical signal into an electrical signal and supplies the electrical signal directly or after signal processing to the assigned send unit which is capable of being activated/deactivated by the control device.

13. Optical transmission link according to Claim 12, **characterised in that** the electrical signal has been supplied to the control device, **in that** the control device registers the signal quality of the signal, and **in that** the control device uses the attaining or exceeding of a predetermined level for the signal quality as a further necessary condition for the activating of the protection-path connection node or of the working-path connection node with respect to the respective transmission direction.

14. Optical transmission link according to Claim 12 or 13, **characterised in that** the send units of the protection-path connection node exhibit an optical wavelength differing from the optical wavelength of the respective receive signal.

15. Optical transmission link according to one of Claims 7 to 14, **characterised in that** the detector units include an optical splitter which splits the optical signal to be registered and supplies a component signal to an optical receive unit which converts the optical component signal into an electrical signal and detects the presence of this electrical signal and supplies to the control device a signal that communicates to the control device the information as to whether or not an optical signal was detected.

## Revendications

1. Procédé pour la protection 1+1 d'un tronçon de transmission optique,
(a) dans lequel un signal d'émission optique est transmis en mode travail, via un chemin de travail du tronçon de transmission, d'un premier noeud terminal sur une extrémité du tronçon de transmission optique à un second noeud terminal sur l'autre extrémité du tronçon de transmission optique,
(b) dans lequel, dans le cas d'une interruption de la transmission de signal via le chemin de travail, on commute du mode travail à un mode protection, dans lequel une transmission de signal s'effectue via un chemin de protection séparé, reliant le premier noeud terminal au second noeud terminal, et
(c) dans lequel le signal d'émission optique est optiquement fractionné dans le premier noeud terminal et est acheminé tant vers le chemin de travail que vers le chemin de protection,
**caractérisé en ce que**,
(d) dans le chemin de protection se trouve un noeud de liaison de chemin de protection, qui peut être activé et désactivé en ce qui concerne la transmission du signal d'émission optique qui a été acheminé vers lui depuis le premier noeud terminal en direction du second noeud terminal, le noeud de liaison de chemin de protection étant désactivé en mode travail,
(e) **en ce que** le signal d'émission optique reçu sur le second noeud terminal, est optiquement fractionné et l'un des signaux partiels optiques dans le second noeud terminal est traité ultérieurement en tant que signal de réception, et **en ce que** l'autre des signaux partiels optiques est acheminé en tant que signal de contrôle de chemin de travail côté est via le chemin de protection vers le noeud de liaison de chemin de protection,
(f) **en ce que** dans le noeud de liaison de chemin de protection est détectée la présence du signal de contrôle de chemin de travail côté est, et **en ce qu'**est utilisée la détection de l'absence du signal de contrôle de chemin de travail côté est en tant que condition nécessaire à l'activation de la transmission de signal dans le noeud de liaison de chemin de protection en direction du second noeud terminal.

2. Procédé selon la revendication 1, **caractérisé**
(a) **en ce que** le tronçon de transmission est conçu de manière bidirectionnelle,
(i) dans lequel un signal d'émission optique est transmis en mode travail, via le chemin de travail, du second noeud terminal au premier noeud terminal et
(ii) dans lequel, dans le cas d'une interruption de la transmission de signal via le chemin de travail, on commute du mode travail à un mode protection, dans lequel une transmission de signal s'effectue via le chemin de protection du second noeud terminal au premier noeud terminal,
(b) **en ce que** dans le second noeud terminal le signal d'émission optique à transmettre au premier noeud terminal est optiquement fractionné et acheminé tant vers le chemin de travail que vers le chemin de protection,
(c) **en ce que** le noeud de liaison de chemin de protection peut aussi être activé et désactivé en ce qui concerne la transmission du signal optique qui est acheminé vers lui depuis le second noeud terminal en direction du premier noeud terminal, le noeud de liaison de chemin de protection étant désactivé en mode travail en ce qui concerne cette transmission de signal,
(d) **en ce que** le signal d'émission optique reçu sur le premier noeud terminal est optiquement fractionné et l'un des signaux partiels est traité ultérieurement dans le premier noeud terminal en tant que signal de réception et en ce que l'autre des signaux partiels est acheminé en tant que signal de contrôle de chemin de travail côté ouest via le chemin de protection vers le noeud de liaison de chemin de protection,
(e) **en ce que** dans le noeud de liaison de chemin de protection est détectée la présence du signal de contrôle de chemin de travail côté ouest, et en ce qu'est utilisée la détection de l'absence du signal de contrôle de chemin de travail côté ouest en tant que condition nécessaire à l'activation de la transmission de signal dans le noeud de liaison de chemin de protection en direction du premier noeud terminal.

3. Procédé selon la revendication 1 ou 2, **caractérisé en ce qu'**il est prévu un noeud de liaison de chemin de travail dans le chemin de travail, **en ce que** le signal d'émission optique acheminé vers le chemin de protection est optiquement fractionné dans le noeud terminal concerné une fois qu'il a été transmis via le chemin de protection, **en ce que** l'un des signaux partiels dans le noeud terminal concerné est traité ultérieurement en tant que signal de réception, et **en ce que** l'autre des signaux partiels est acheminé en tant que signal de contrôle de chemin de protection côté est ou signal de contrôle de chemin de protection côté ouest via le chemin de travail concerné vers le noeud de liaison concerné, **en ce que** dans le noeud de liaison de chemin de travail est détectée la présence du signal de contrôle de chemin de protection côté est et/ou du signal de contrôle de chemin de protection côté ouest, et **en ce qu'**est utilisée la détection de l'absence du signal de contrôle de chemin de protection côté est ou du signal de contrôle de chemin de protection côté ouest en tant que condition nécessaire à l'activation de la transmission de signal via le noeud de liaison de chemin de travail en direction du premier noeud terminal (absence du signal de contrôle de chemin de protection côté est) ou en direction du second noeud terminal (absence du signal de contrôle de chemin de protection côté ouest).

4. Procédé selon l'une des revendications précédentes, **caractérisé en ce que**, dans le noeud de liaison de chemin de protection et/ou dans le noeud de liaison de chemin de travail, la qualité de signal de l'un des signaux d'émission optiques acheminés par le premier ou le second noeud terminal est testée, et **en ce que** le noeud de liaison de chemin de protection ou le noeud de liaison de chemin de travail est activé, pour ce qui est de la transmission du signal d'émission optique concerné en direction du noeud terminal concerné, uniquement si la qualité du signal d'émission optique concerné a atteint ou dépassé une valeur prédéfinie pour la qualité de signal.

5. Procédé selon l'une des revendications 2 à 4, **caractérisé en ce que**, tant dans le noeud de liaison de chemin de protection que dans le noeud de liaison de chemin de travail, les conditions nécessaires à l'activation ou à la désactivation de la transmission de signal en direction du premier ou du second ou des deux noeuds terminaux sont testées, et **en ce que** dans les noeuds, après le lancement du processus de test à respectivement effectuer, des temps de retard prédéfinis différents ou choisis de manière aléatoire à l'intérieur d'une plage prédéfinie autorisée sont respectivement escomptés.

6. Procédé selon la revendication 5, **caractérisé en ce que** les processus de test dans les noeuds de liaison sont répétées dans le cadre de boucles à parcourir de manière cyclique, le parcours des boucles étant de préférence lancé avec le démarrage des noeuds de liaison.

7. Tronçon de transmission optique avec protection 1+1,
(a) avec un premier noeud terminal sur une extrémité du tronçon de transmission optique, qui, pour la transmission d'un signal d'émission optique,
(i) est relié en mode travail du tronçon de transmission, via un chemin de travail, à un second noeud terminal sur l'autre extrémité du tronçon de transmission optique et
(ii) est relié pour la transmission du signal d'émission optique en mode protection du tronçon de transmission, via un chemin de protection, au second noeud terminal, et
(b) avec un dispositif de commande pour l'enregistrement d'une interruption de la transmission de signal via le chemin de travail, et pour la commutation du mode travail au mode protection lorsqu'une interruption de la transmission de signal est détectée via le chemin de travail,
(c) dans lequel une unité de fractionnement 1x2 optique est prévue dans le premier noeud terminal, unité vers laquelle sur un port côté noeud le signal d'émission optique à émettre est acheminé, l'un des deux ports côté tronçon de l'unité de fractionnement étant relié au chemin de travail et l'autre des deux ports côté tronçon de l'unité de fractionnement étant relié au chemin de protection,
caractérisé
(d) en ce qu'un noeud de liaison de chemin de protection est prévu dans le chemin de protection, lequel noeud peut être activé et désactivé en ce qui concerne la transmission du signal d'émission optique qui est acheminé vers lui depuis le premier noeud terminal, via le chemin de protection, en direction du second noeud terminal,
(e) en ce qu'une unité de fractionnement 1x2 est prévue dans le second noeud terminal, unité vers laquelle sur l'un des deux ports côté tronçon de l'unité de fractionnement le signal d'émission optique reçu via le chemin de travail est acheminé, le corps côté noeud de l'unité de fractionnement étant relié à une unité de réception du second noeud terminal et l'autre des deux ports côté tronçon étant relié au chemin de protection, de sorte que, de ce fait, le signal partiel fractionné est acheminé en tant que signal de contrôle de chemin de travail côté est, via le chemin de travail, vers le noeud de liaison du chemin de protection , et
(f) en ce que le dispositif de commande est prévu dans le noeud de liaison de chemin de protection, dans lequel le dispositif de commande comprend une unité de détecteur pour l'enregistrement du signal de contrôle de chemin de travail côté est, et des moyens pour l'activation ou la désactivation de la transmission de signal dans le noeud de liaison de chemin de protection en direction du second noeud terminal, et
(g) en ce que le dispositif de commande en mode travail dans le noeud de liaison de chemin de protection active la transmission de signal désactivée lorsque l'unité de détecteur ne détecte pas de signal de contrôle de chemin de travail côté est et lorsque d'autres conditions nécessaires sont éventuellement remplies.

8. Tronçon de transmission optique selon la revendication 7, **caractérisé**
(a) **en ce que** le tronçon de transmission est conçu de manière bidirectionnelle, dans lequel, dans le second noeud terminal, le signal d'émission optique à transmettre au premier noeud terminal est acheminé vers le port côté noeud de l'unité de fractionnement 1x2, les signaux partiels optiques fractionnés étant acheminés vers le chemin de travail et le chemin de protection via les deux ports côté tronçon et
(b) **en ce que** le noeud de liaison de chemin de protection peut aussi être activé et désactivé en ce qui concerne la transmission du signal optique, qui est acheminé vers lui depuis le second noeud terminal en direction du premier noeud terminal,
(c) **en ce que** le signal d'émission optique reçu sur le premier noeud terminal est acheminé vers le port côté tronçon concerné de l'unité de fractionnement 1x2, en ce que l'un des signaux partiels optiques est acheminé vers le port côté noeud de l'unité de fractionnement et vers une unité de réception reliée à l'unité de fractionnement et prévue dans le premier noeud terminal, et en ce que l'autre des signaux partiels optiques est acheminé vers l'autre port côté tronçon concerné de l'unité de fractionnement 1x2 et donc en tant que signal de contrôle du chemin de travail côté ouest, via le chemin de protection, vers le noeud de liaison de chemin de protection,
(d) **en ce que** le dispositif de commande comprend une unité de détecteur pour l'enregistrement du signal de contrôle du chemin de travail côté ouest, et des moyens pour l'activation ou la désactivation de la transmission du signal dans le noeud de liaison du chemin de protection en direction du premier noeud terminal, et
(e) **en ce que** le dispositif de commande en mode travail dans le noeud de liaison de chemin de protection active la transmission de signal désactivée en direction du premier noeud terminal lorsque l'unité de détecteur ne détecte pas de signal de contrôle de chemin de travail côté ouest et lorsque d'autres conditions nécessaires sont éventuellement remplies.

9. Tronçon de transmission optique selon la revendication 7, **caractérisé**
(a) **en ce que** le tronçon de transmission est conçu de manière bidirectionnelle, en ce qu'une autre unité de fractionnement 1x2 optique est prévue dans le second noeud terminal, unité vers laquelle sur un port côté noeud le signal d'émission optique à émettre est acheminé, l'un des deux ports côté tronçon de l'autre unité de fractionnement étant relié à un autre chemin de travail et l'autre des deux ports côté tronçon de l'autre unité de fractionnement étant relié à un autre chemin de protection,
(b) **en ce que** l'autre chemin de protection est également guidé via le noeud de liaison de chemin de protection, qui peut aussi être activé et désactivé en ce qui concerne la transmission du signal d'émission optique, qui est acheminé vers lui depuis le second noeud terminal, via le chemin de protection, en direction du premier noeud terminal,
(c) **en ce qu'**une unité de fractionnement 1x2 est prévue dans le second noeud terminal, unité vers laquelle sur l'un des deux ports côté tronçon de l'unité de fractionnement le signal d'émission optique reçu via le chemin de travail est acheminé, le port côté noeud de l'unité de fractionnement étant relié à une unité de réception du second noeud terminal et l'autre des deux ports côté tronçon étant relié au chemin de protection, de sorte que, de ce fait, le signal partiel fractionné est acheminé en tant que signal de contrôle de chemin de travail côté est, via le chemin de travail, vers le noeud de liaison de chemin de protection,
(d) **en ce que** le dispositif de commande comprend une unité de détecteur pour l'enregistrement du signal de contrôle de chemin de travail côté ouest, et des moyens pour l'activation ou la désactivation de la transmission de signal dans le noeud de liaison de chemin de protection en direction du premier noeud terminal, et
(e) **en ce que** le dispositif de commande en mode travail dans le noeud de liaison de chemin de protection active la transmission de signal désactivée en direction du premier noeud terminal lorsque l'unité de détecteur ne détecte pas de signal de contrôle de chemin de travail côté ouest et lorsque d'autres conditions nécessaires sont éventuellement remplies.

10. Tronçon de transmission optique selon l'une des revendications 7 à 9, **caractérisé,**
(a) **en ce qu'**un noeud de liaison de chemin de travail est prévu dans le chemin de travail, noeud vers lequel, en mode protection, le signal optique, transmis via le chemin de protection depuis le premier vers le second noeud terminal au moyen de l'unité de fractionnement 1x2 du second noeud terminal, est acheminé en tant que signal de contrôle de chemin de protection côté est via le chemin de travail
(b) **en ce que** le noeud de liaison de chemin de travail présente un dispositif de commande, qui comprend une unité de détecteur pour l'enregistrement du signal de contrôle de chemin de travail côté est, et des moyens pour l'activation ou la désactivation de la transmission de signal dans le noeud de liaison de chemin de travail en direction du second noeud terminal, et
(c) **en ce que** le dispositif de commande en mode protection dans le noeud de liaison de chemin de travail active la transmission de signal désactivée en direction du second noeud terminal lorsque l'unité de détecteur ne détecte pas de signal de contrôle de chemin de travail côté est et lorsque d'autres conditions nécessaires sont éventuellement remplies.

11. Tronçon de transmission optique selon la revendication 10, **caractérisé**
(a) **en ce que** le signal optique, transmis via le chemin de protection ou l'autre chemin de protection du second au premier noeud terminal, est acheminé vers le noeud de liaison de chemin de travail en mode protection, au moyen de l'unité de fractionnement 1x2 concernée du premier noeud terminal, via le chemin de travail ou l'autre chemin de travail, en tant que signal de contrôle de chemin de protection côté ouest,
(b) **en ce que** le dispositif de commande comprend une unité de détecteur pour l'enregistrement du signal de contrôle de chemin de travail côté ouest, et des moyens pour l'activation ou la désactivation de la transmission de signal dans le noeud de liaison de chemin de travail en direction du premier noeud terminal, et
(c) **en ce que** le dispositif de commande en mode protection dans le noeud de liaison de chemin de travail active la transmission de signal désactivée en direction du premier noeud terminal lorsque l'unité de détecteur ne détecte pas de signal de contrôle de chemin de travail côté ouest et lorsque d'autres conditions nécessaires sont éventuellement remplies.

12. Tronçon de transmission optique selon l'une des revendications 7 à 11, **caractérisé en ce qu'**une unité de récepteur assignée et une unité d'émission assignée sont prévues dans le noeud de liaison de chemin de protection et/ou dans le noeud de liaison de chemin de travail pour chaque sens de transmission, dans lequel le signal optique concerné, à transmettre du premier au second noeud terminal ou inversement, est acheminé vers l'unité de récepteur, l'unité de récepteur convertissant le signal optique en un signal électrique et acheminant le signal électrique immédiatement ou après un traitement de signal à l'unité d'émission assignée, qui peut être activée ou désactivée par le dispositif de commande.

13. Tronçon de transmission optique selon la revendication 12, **caractérisé en ce que** le signal électrique est acheminé vers le dispositif de commande, **en ce que** le dispositif de commande enregistre la qualité du signal, et **en ce que** le dispositif de commande utilise le fait d'atteindre ou de dépasser un niveau prédéfini pour la qualité de signal en tant qu'autre condition nécessaire pour l'activation du noeud de liaison de chemin de protection ou du noeud de liaison de chemin de travail en lien avec le sens de transmission respectif.

14. Tronçon de transmission optique selon la revendication 12 ou 13, **caractérisé en ce que** les unités d'émission du noeud de liaison de chemin de protection présentent une longueur d'onde optique différente de la longueur d'onde optique du signal de réception respectif.

15. Tronçon de transmission optique selon l'une des revendications 7 à 14, **caractérisé en ce que** les unités de détecteur comprennent un fractionneur optique qui fractionne le signal optique à enregistrer et amène un signal partiel à une unité de réception optique, laquelle convertit le signal partiel optique en un signal électrique et détecte la présence de ce signal électrique et achemine un signal au dispositif de commande, lequel signal communique au dispositif de commande l'information indiquant si un signal optique a été détecté ou non.
